(19) Europäisches Patentamt
European Patent Office
Office européen des brevets

(11) EP 4 764 055 A1

(12) **EUROPEAN PATENT APPLICATION**
published in accordance with Art. 153(4) EPC

(43) Date of publication:
**24.06.2026 Bulletin 2026/26**

(21) Application number: **24854078.3**

(22) Date of filing: **28.06.2024**

(51) International Patent Classification (IPC):
***D06M 15/643*** (2006.01) ***B60R 21/235*** (2006.01)
***C08K 3/04*** (2006.01) ***C08K 3/36*** (2006.01)
***C08K 5/54*** (2006.01) ***C08L 83/04*** (2006.01)
***C09D 183/04*** (2006.01)

(52) Cooperative Patent Classification (CPC):
**B60R 21/235; C08K 3/04; C08K 3/34; C08K 3/36; C08K 5/54; C08L 83/04; C09D 183/04; D06M 15/643**

(86) International application number:
**PCT/JP2024/023540**

(87) International publication number:
**WO 2025/037487 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.08.2023 JP 2023131899**

(71) Applicant: **Shin-Etsu Chemical Co., Ltd.**
**Tokyo 100-0005 (JP)**

(72) Inventors:
- **ASHIDA, Ryo**
  **Annaka-shi, Gunma 379-0224 (JP)**
- **HIRABAYASHI, Satao**
  **Annaka-shi, Gunma 379-0224 (JP)**
- **UBUKATA, Shigeru**
  **Annaka-shi, Gunma 379-0224 (JP)**

(74) Representative: **Schicker, Silvia**
**Wuesthoff & Wuesthoff**
**Patentanwälte und Rechtsanwalt PartG mbB**
**Schweigerstraße 2**
**81541 München (DE)**

# (54) ADDITION-CURABLE LIQUID SILICONE RUBBER COMPOSITION FOR AIRBAGS, AND AIRBAG

(57) The present invention is an addition-curable liquid silicone rubber composition for an airbag, including (A) a linear organopolysiloxane, (B) a powdery organopolysiloxane resin having a three-dimensional network structure, (C) organohydrogenpolysiloxane having two or more hydrosilyl groups per molecule, (D) a silica fine powder having a BET specific surface area of 50 $m^2/g$ or more, (E) a catalyst for a hydrosilylation reaction, (F) an organosilicon compound having an adhesiveness-imparting functional group, and (G) an expanded graphite powder having a median size of 0.1-50 $\mu m$, wherein, the component (c) is contained in such that the total sum of the hydrosilyl group in the composition is 1-10 mol per 1 mol of the total alkenyl groups bonded to a silicon atom in the composition. This can provide an addition-curable liquid silicone rubber composition for an airbag that is less prone to coating unevenness during coating and facilitates easy detection of defective products.

EP 4 764 055 A1

## Description

### TECHNICAL FIELD

The present invention relates to an addition-curable liquid silicone rubber composition for an airbag and an airbag.

### BACKGROUND ART

A silicone rubber composition for an airbag for the purpose of forming a rubber coating film on a fabric surface has been conventionally proposed. Since the airbag with a silicone rubber coating film has excellent internal pressure holding performance and a low burn rate, such an airbag is suitably used as an airbag for automobiles, etc.

As such an addition-curable liquid silicone rubber composition for an airbag, a silicone rubber composition using an organohydrogenpolysiloxane having a T unit or a Q unit as a crosslinking agent is disclosed (Patent Document 1). A coated base fabric on which this composition is applied is characterized by excellent strength. Disclosed is an addition-curable liquid silicone rubber composition for an airbag in which a silicone resin including M, D, and Q units and having a crosslinkable functional group only in the D unit is blended as a flame-retardant agent (Patent Document 2). An airbag on which this composition is applied is characterized by a low burn rate.

Meanwhile, the amount of the applied silicone rubber composition has decreased in recent years in order to reduce space and weight, and there has been a demand for development of a silicone rubber composition for an airbag having flame retardancy equivalent to that of the conventional airbag, even with the decreased amount applied. For improving the flame retardancy, it is considered to blend a flame-retardant agent. For example, disclosed are a composition (Patent Document 3) in which iron (III) oxide monohydrate or $\alpha$-iron (III) oxide is blended as the flame-retardant agent in a silicone rubber composition, a composition (Patent Documents 4 and 5) blended with carbon black, etc. However, when a silicone rubber composition is blended with a flame-retardant agent such as iron oxide or carbon black, which has strong coloring power, coating unevenness can occur during coating, impairing the appearance. Furthermore, the manufacturing process for a base fabric of an airbag involves many steps, such as weaving the fabric, washing, drying, coating with a silicone material, heat-curing the silicone material, and winding the coated fabric. If defects, such as stains, scratches, or holes, occur in the base fabric of an airbag during these processes, and when the silicone rubber coating on the base fabric of an airbag is dark in color and has strong hiding power, it may be difficult to detect these defective products by visual inspection, image inspection using a camera, or the like.

### CITATION LIST

### PATENT LITERATURE

| | |
|---|---|
| Patent Document 1: | JP2019-513907A |
| Patent Document 2: | WO2018/168315A1 |
| Patent Document 3: | JP2022-072086A |
| Patent Document 4: | JPH7-300774A |
| Patent Document 5: | JPH7-195990A |

### SUMMARY OF INVENTION

### TECHNICAL PROBLEM

The present invention has been made in view of the above circumstances. An object of the present invention is to provide: an addition-curable liquid silicone rubber composition for an airbag that is less prone to coating unevenness during coating, makes a base fabric of an airbag coated with the composition have a slow burn rate, and facilitates detection of defects such as stains, scratches, and holes; and an airbag having a cured film of the composition.

### SOLUTION TO PROBLEM

To solve the above problem, the present invention provides an addition-curable liquid silicone rubber composition for an airbag, the composition comprising

(A) a linear organopolysiloxane having two or more alkenyl groups bonded to a silicon atom per molecule and having a weight-average polymerization degree of 50 to 2,000: 100 parts by mass;
(B) a powdery organopolysiloxane resin having a three-dimensional network structure, wherein the organopolysiloxane resin does not have a hydrosilyl group: 5 to 100 parts by mass;
(C) organohydrogenpolysiloxane having two or more hydrosilyl groups per molecule;
(D) a silica fine powder having a BET specific surface area of 50 $m^2/g$ or more; 1 to 50 parts by mass;
(E) a catalyst for a hydrosilylation reaction: 1 to 500 ppm in terms of the mass of the catalyst metal element, based on the total mass of the components (A) to (D);
(F) an organosilicon compound having an adhesiveness-imparting functional group: 0.1 to 10 parts by mass; and
(G) an expanded graphite powder having a median size of 0.1 to 50 $\mu$m: 0.1 to 1 parts by mass,

wherein, the component (c) is contained in such that the total sum of the hydrosilyl group in the composition is 1 to 10 mol per 1 mol of the total alkenyl groups bonded to a silicon atom in the composition.

A silicone-coated base fabric of an airbag that has a cured film of such an addition-curable liquid silicone rubber composition for an airbag, has excellent flame retardancy, is less prone to having coating unevenness, and facilitates detection of defects such as stains, scratches, and holes.

Further, in the present invention, the addition-curable liquid silicone rubber composition for an airbag preferably comprises, as a component (H), one or more condensation catalysts selected from an organotitanium compound, an organozirconium compound, and an organoaluminum compound at 0.05 to 5 parts by mass based on 100 parts by mass of the component (A).

When such an addition-curable liquid silicone rubber composition for an airbag is used, the silicone-coated base fabric of an airbag made of the composition will have excellent adhesive properties.

Further, in the present invention, the component (F) is preferably an organosilicon compound having: one or more reactive silyl groups selected from an alkoxysilyl group, an alkenyl-group-containing silyl group, and a hydrosilyl group; and one or more reactive organic groups selected from an epoxy group, an isocyanate group, and a (meth)acryl group, per molecule.

Such an addition-curable liquid silicone rubber composition for an airbag has more excellent adhesive properties to a base fabric of an airbag of a silicone rubber layer.

Further, the present invention provides an airbag having a cured film of the addition-curable liquid silicone rubber composition for airbags of the present invention on a base fabric of an airbag, wherein the surface of the cured film has an L value of 60 or more when measured in the L*a*b* color Space.

Such an airbag has excellent flame retardancy, is less prone to having coating unevenness, and facilitates detection of defects such as stains, scratches, and holes.

## ADVANTAGEOUS EFFECTS OF INVENTION

As described above, the present invention can provide an addition-curable liquid silicone rubber composition for an airbag, applied onto a base fabric of an airbag and cured, having excellent flame retardancy, less prone to causing coating unevenness, and facilitating the detection of defects.

## DESCRIPTION OF EMBODIMENTS

The present inventors have earnestly studied the above problems, and consequently found that when an addition-curable liquid silicone rubber composition for an airbag containing an expanded graphite powder was applied onto a base fabric of the airbag and cured, the coated base fabric has excellent flame retardancy, was less prone to having coating unevenness, and was possible to detect defects, such as stains, scratches, and holes, and have completed the present invention.

That is, the present invention is an addition-curable liquid silicone rubber composition for an airbag, the composition comprising

(A) a linear organopolysiloxane having two or more alkenyl groups bonded to a silicon atom per molecule and having a weight-average polymerization degree of 50 to 2,000: 100 parts by mass;
(B) a powdery organopolysiloxane resin having a three-dimensional network structure, wherein the organopolysiloxane resin does not have a hydrosilyl group: 5 to 100 parts by mass;
(C) organohydrogenpolysiloxane having two or more hydrosilyl groups per molecule;
(D) a silica fine powder having a BET specific surface area of 50 $m^2/g$ or more; 1 to 50 parts by mass;
(E) a catalyst for a hydrosilylation reaction: 1 to 500 ppm in terms of the mass of the catalyst metal element, based on the total mass of the components (A) to (D);

(F) an organosilicon compound having an adhesiveness-imparting functional group: 0.1 to 10 parts by mass; and
(G) an expanded graphite powder having a median size of 0.1 to 50 μm: 0.1 to 1 parts by mass,

wherein, the component (c) is contained in such that the total sum of the hydrosilyl group in the composition is 1 to 10 mol per 1 mol of the total alkenyl groups bonded to a silicon atom in the composition.

Hereinafter, the present invention will be described in detail, but the present invention is not limited thereto.

It should be understood that, in the present description, viscosity is a value measured at 25°C using a rotary viscosimeter according to a method described in JIS K 7117-1:1999. A weight-average polymerization degree is a value determined as a weight-average molecular weight (a weight-average polymerization degree) in terms of polystyrene by gel permeation chromatography (GPC) analysis measured under the following conditions using tetrahydrofuran (THF) as a developing liquid.

[Measurement Condition]

Developing solvent: Tetrahydrofuran
Flow rate: 0.35 mL/min
Detector: Differential refractive index detector (RI)
Column: TSK Guardcolumn SuperH-L
TSKgel SuperH4000 (6.0 mm I.D. × 15 cm × 1)
TSKgel SuperH3000 (6.0 mm I.D. × 15 cm × 1)
TSKgel SuperH2000 (6.0 mm I.D. × 15 cm × 2)
(All the above are manufactured by Tosoh Corporation.)
Column temperature: 40°C
Injection amount of sample: 10 μL (a tetrahydrofuran solution at a concentration of 0.5 weight%)

<Addition-Curable Liquid Silicone Rubber Composition for Airbag>

The inventive addition-curable liquid silicone rubber composition for an airbag includes:

(A) a linear organopolysiloxane having two or more alkenyl groups bonded to a silicon atom per molecule and having a weight-average polymerization degree of 50 to 2,000: 100 parts by mass;
(B) a powdery organopolysiloxane resin having a three-dimensional network structure, wherein the organopolysiloxane resin does not have a hydrosilyl group: 5 to 100 parts by mass;
(C) organohydrogenpolysiloxane having two or more hydrosilyl groups per molecule;
(D) a silica fine powder having a BET specific surface area of 50 $m^2/g$ or more; 1 to 50 parts by mass;
(E) a catalyst for a hydrosilylation reaction: 1 to 500 ppm in terms of the mass of the catalyst metal element, based on the total mass of the components (A) to (D);
(F) an organosilicon compound having an adhesiveness-imparting functional group: 0.1 to 10 parts by mass; and
(G) an expanded graphite powder having a median size of 0.1 to 50 μm: 0.1 to 1 parts by mass,

wherein, the component (c) is contained in such that the total sum of the hydrosilyl group in the composition is 1 to 10 mol per 1 mol of the total alkenyl groups bonded to a silicon atom in the composition, and is liquid at room temperature (25°C).

Hereinafter, each component will be described in detail.

[Component (A)]

In the present invention, the organopolysiloxane of the component (A) is an organopolysiloxane having two or more alkenyl groups bonded to a silicon atom per molecule and having a polymerization degree of 50 to 2,000, and is a base polymer (a main agent) of the inventive addition-curable liquid silicone rubber composition for an airbag.

Further, a molecular structure of the component (A) is characterized by being linear. Among those having such a structure, the component (A) is preferably a diorganopolysiloxane in which the main chain is basically composed of repetition of diorganosiloxane units, and both ends of the molecular chain are blocked with a triorganosiloxy group. In the molecule of the linear organopolysiloxane of the component (A), positions of the silicon atom to which the alkenyl group is bonded may be either or both of the ends of the molecular chain (namely, the triorganosiloxy group) or the middle of the molecular chain (namely, the bifunctional diorganosiloxane unit positioned at a non- end of the molecular chain). The component (A) is particularly preferably a linear diorganopolysiloxane having alkenyl groups bonded to silicon atoms at

both ends of the molecular chain at least.

Examples of the alkenyl group bonded to a silicon atom in the component (A) include alkenyl groups having typically 2 to 8 carbon atoms, and preferably 2 to 4 carbon atoms. Specific examples thereof include a vinyl group, an allyl group, a propenyl group, a butenyl group, a pentenyl group, a hexenyl group, a cyclohexenyl group, and a heptenyl group, and a vinyl group is particularly preferable.

A number of the alkenyl groups bonded to a silicon atom in the component (A) is 2 or more per molecule, preferably 2 to 100, and more preferably 2 to 50.

Examples of a saturated or unsaturated monovalent hydrocarbon group bonded to the silicon atom other than the alkenyl group in the component (A) include a monovalent hydrocarbon group having typically 1 to 12 carbon atoms, and preferably 1 to 10 carbon atoms. Specific examples of the monovalent hydrocarbon group include: alkyl groups, such as a methyl group, an ethyl group, a propyl group, a butyl group, a pentyl group, a hexyl group, a cyclohexyl group, and a heptyl group; aryl groups, such as a phenyl group, a tolyl group, a xylyl group, and a naphthyl group; aralkyl groups, such as a benzyl group and a phenethyl group; and halogen-substituted alkyl groups, such as a chloromethyl group, a 3-chloropropyl group, and a 3,3,3-trifluoropropyl group. A methyl group is particularly preferable.

The weight-average polymerization degree of the component (A) is 50 to 2,000, preferably 100 to 1,500, and more preferably 120 to 1,000. A weight-average polymerization degree of less than 50 may deteriorate the mechanical properties of the obtained addition-curable liquid silicone rubber composition for an airbag. A weight-average polymerization degree of more than 2,000 increases the viscosity of the obtained addition-curable liquid silicone rubber composition for an airbag, and coating operability may deteriorate.

The viscosity at 25°C of the component (A) is preferably 50 to 200,000 mPa·s, more preferably 100 to 150,000 mPa·s, and further preferably 400 to 100,000 mPa·s. The viscosity of the component (A) of 50 mPa·s or more yields good mechanical properties of the obtained addition-curable liquid silicone rubber composition for an airbag, and the viscosity of 200,000 mPa·s or less does not increase the viscosity of the obtained addition-curable liquid silicone rubber composition for an airbag to yield good coating operability.

Specific examples of the organopolysiloxane of the component (A) include a dimethylsiloxane-methylvinylsiloxane copolymer blocked at both ends of the molecular chain with a trimethylsiloxy group, methylvinylpolysiloxane blocked at both ends of the molecular chain with a trimethylsiloxy group, a dimethylsiloxane-methylvinylsiloxane-methylphenylsiloxane copolymer blocked at both ends of the molecular chain with a trimethylsiloxy group, dimethylpolysiloxane blocked at both ends of the molecular chain with a dimethylvinylsiloxy group, methylvinylpolysiloxane blocked at both ends of the molecular chain with a dimethylvinylsiloxy group, a dimethylsiloxane-methylvinylsiloxane copolymer blocked at both ends of the molecular chain with a dimethylvinylsiloxy group, a dimethylsiloxane-methylvinylsiloxane-methylphenylsiloxane copolymer blocked at both ends of the molecular chain with a dimethylvinylsiloxy group, dimethylpolysiloxane blocked at both ends of the molecular chain with a divinylmethylsiloxy group, a dimethylsiloxane-methylvinylsiloxane copolymer blocked at both ends of the molecular chain with a divinylmethylsiloxy group, dimethylpolysiloxane blocked at both ends of the molecular chain with a trivinylsiloxy group, a dimethylsiloxane-methylvinylsiloxane copolymer blocked at both ends of the molecular chain with a trivinylsiloxy group, and a mixture composed of two or more of these organopolysiloxanes.

One of the organopolysiloxane of the component (A) may be used, or two or more kinds thereof may be used in combination.

[Component (B)]

The powdery organopolysiloxane resin having a three-dimensional network structure, provided that the organopolysiloxane resin does not have a hydrosilyl group, of the component (B) acts as a flame-retardancy improving agent. The component (B) is preferably fundamentally composed of one or more branched siloxane units selected from trifunctional $R^1SiO_{3/2}$ units and tetrafunctional $SiO_{4/2}$ units. Optionally, it may contain a monofunctional $R^1{}_3SiO_{1/2}$ unit and/or a difunctional $R^1{}_2SiO_{2/2}$ unit as needed. However, this organopolysiloxane resin does not have a hydrogen atom bonded to a silicon atom (a hydrosilyl group) in its molecule. Furthermore, this organopolysiloxane resin has a three-dimensional network (resinous) structure and is powdery at 25°C, thereby clearly distinguishing it from the component (A), which has a linear structure.

$R^1$ independently represents a substituted or unsubstituted monovalent hydrocarbon group having 1 to 10 carbon atoms, preferably 1 to 8 carbon atoms, and examples thereof include the same as those exemplified for the alkenyl group and monovalent organic group in the above component (A). Specific examples include: alkyl groups, such as a methyl group, an ethyl group, a propyl group, a butyl group, a pentyl group, a hexyl group, a cyclohexyl, and a heptyl groups; alkenyl groups, such as a vinyl group, an allyl group, a propenyl group, a butenyl group, a pentenyl group, a hexenyl group, a cyclohexenyl group, and a heptenyl group; aryl groups, such as a phenyl group, a tolyl group, a xylyl group, and a naphthyl group; aralkyl groups, such as a benzyl group and a phenethyl group; and halogen-substituted alkyl groups, such as a chloromethyl group, a 3-chloropropyl group, and a 3,3,3-trifluoropropyl group. In particular, a methyl

group and a vinyl group are preferable.

The contained amount of alkenyl groups bonded to a silicon atom in the component (B) is preferably 0 to 10 mol%, and particularly preferably 2 to 8 mol%, based on the total amount of substituents bonded to a silicon atom.

The organopolysiloxane resin of the component (B) can have one or more siloxane units selected from $R^1SiO_{3/2}$ units and $SiO_{4/2}$ units to form a three-dimensional network structure. The total amount of these units in the organopolysiloxane resin of the component (B) is preferably 20 to 75 mol%, and particularly preferably 30 to 65 mol%. Within this range, a sufficient flame-retardancy improving effect is obtained, which is desirable.

As mentioned above, the organopolysiloxane resin of the component (B) may optionally contain $R^1{}_3SiO_{1/2}$ units and/or $R^1{}_2SiO_{2/2}$ units, the total contained amount of which is preferably 0 to 70 mol%, and particularly preferably 0 to 50 mol%, in the organopolysiloxane resin of the component (B).

The weight-average molecular weight of the organopolysiloxane resin of the component (B) in terms of polystyrene, as measured by gel permeation chromatography (GPC) analysis using tetrahydrofuran (THF) as a developing solvent, is preferably in the range of 2,000 to 50,000, and particularly preferably 4,000 to 20,000. When the weight-average molecular weight is within the range of 2,000 to 50,000, a sufficient flame-retardancy improving effect can be achieved, and the addition-curable liquid silicone rubber composition for an airbag has preferable viscosity for operability in coating. It should be understood that this weight-average molecular weight is determined by GPC analysis under the same conditions as those used to determine the degree of polymerization of the component (A).

Specific examples of organopolysiloxane resins of the component (B) include: an organosiloxane copolymer including a siloxane unit represented by the formula: $R'_3SiO_{1/2}$, a siloxane unit represented by the formula: $R'_2R''SiO_{1/2}$, a siloxane unit represented by the formula: $R'_2SiO_{2/2}$, and a siloxane unit represented by the formula: $SiO_{4/2}$; an organosiloxane copolymer including a siloxane unit represented by the formula: $R'_3SiO_{1/2}$, a siloxane unit represented by the formula: $R'_2R''SiO_{1/2}$, and a siloxane unit represented by the formula: $SiO_{4/2}$; an organosiloxane copolymer including a siloxane unit represented by the formula: $R'_2R''SiO_{1/2}$, a siloxane unit represented by the formula: $R'_2SiO_{2/2}$, and a siloxane unit represented by the formula: $SiO_{4/2}$; an organosiloxane copolymer including a siloxane unit represented by the formula: $R'R''SiO_{2/2}$ and a siloxane unit represented by the formula: $R'SiO_{3/2}$ or a siloxane unit represented by the formula: $R''SiO_{3/2}$; and a mixture including two or more kinds of these organopolysiloxane.

In the above formulae, R' represents independently a group selected from: alkyl groups having 1 to 10 carbon atoms, preferably 1 to 8 carbon atoms; aryl groups having 6 to 10 carbon atoms, preferably 1 to 8 carbon atoms; and aralkyl groups having 7 to 10 carbon atoms, preferably 7 or 8 carbon atoms. Examples include: alkyl groups, such as a methyl group, an ethyl group, a propyl group, a butyl group, a pentyl group, a hexyl group, a cyclohexyl group, and a heptyl group; aryl groups, such as a phenyl group, a tryl group, a xylyl group, and a naphthyl group; aralkyl groups, such as a benzyl group and a phenethyl group; and halogenated alkyl groups, such as a chloromethyl group, a 3-chloropropyl group, and a 3,3,3-trifluoropropyl group. Among these, a methyl group is particularly preferable. Furthermore, R" in the above formula is an alkenyl group having 2 to 10, preferably 2 to 8, carbon atoms. Examples thereof include a vinyl group, an allyl group, a butenyl group, a pentenyl group, a hexenyl group, and a heptenyl group. Among these, a vinyl group is particularly preferable.

The blending amount of the component (B) is 5 to 100 parts by mass, preferably 8 to 90 parts by mass, and particularly preferably 10 to 80 parts by mass based on 100 parts by mass of the organopolysiloxane of the component (A). When the blending amount is within the range of 5 to 100 parts by mass, a sufficient flame-retardancy improving effect is achieved, resulting in excellent cost-effectiveness.

One of the organopolysiloxane resins having a three-dimensional network structure of the component (B) may be used, or two or more kinds thereof may be used in combination.

[Component (C)]

The component (C) is organohydrogenpolysiloxane having two or more hydrogens bonded to a silicon atom (hydrosilyl groups) per molecule, which acts as a crosslinking agent for the present composition.

The molecular structure of the organohydrogenpolysiloxane of the component (C) may be any of linear, cyclic, branched, or three-dimensional network structures. In this case, the organohydrogenpolysiloxane having 2 to 300, particularly 4 to 200, silicon atoms (or a polymerization degree) per molecule and being liquid at 25°C is suitably used. The number of the hydrosilyl groups contained in one molecule is 2 or more, preferably 2 to 200, more preferably 2 to 150, and further preferably 2 to 100. The hydrosilyl groups may be present at the end of the molecular chain, at the side chain (in the middle of the molecular chain), or may be present at both of them.

Examples of substituents bonded to a silicon atom of the component (C) include a substituted or unsubstituted monovalent hydrocarbon group having typically 1 to 12 carbon atoms, preferably 1 to 10 carbon atoms. Specific examples of the monovalent hydrocarbon group include: alkyl groups, such as a methyl group, an ethyl group, a propyl group, a butyl group, a pentyl group, a hexyl group, a cyclohexyl group, and a heptyl group; aryl groups, such as a phenyl group, a tolyl group, a xylyl group, and a naphthyl group; aralkyl groups, such as a benzyl group and a phenethyl group; and halogen-substituted alkyl groups, such as a chloromethyl group, a 3-chloropropyl group, and a 3,3,3-trifluoropropyl group. A methyl group or a phenyl group is particularly preferable.

Examples of such organohydrogenpolysiloxane include 1,1,3,3-tetramethyldisiloxane, 1,3,5,7-tetramethylcyclotetrasiloxane, methylhydrogencyclopolysiloxane, a methylhydrogensiloxane-dimethylsiloxane cyclic copolymer, tris(dimethylhydrogensiloxy)methylsilane, tris(dimethylhydrogensiloxy)phenylsilane, methylhydrogenpolysiloxane blocked at both ends with a trimethylsiloxy group, a dimethylsiloxane-methylhydrogensiloxane copolymer blocked at both ends with a trimethylsiloxy group, dimethylpolysiloxane blocked at both ends with a dimethylhydrogensiloxy group, a dimethylsiloxane-methylhydrogensiloxane copolymer blocked at both ends with a dimethylhydrogensiloxy group, a methylhydrogensiloxane-diphenylsiloxane copolymer blocked at both ends with a trimethylsiloxy group, a methylhydrogensiloxane-diphenylsiloxane-dimethylsiloxane copolymer blocked at both ends with a trimethylsiloxy group, cyclic methylhydrogenpolysiloxane, a cyclic methylhydrogensiloxane-dimethylsiloxane copolymer, a cyclic methylhydrogensiloxane-diphenylsiloxane-dimethylsiloxane copolymer, a copolymer including a $(CH_3)_2HSiO_{1/2}$ unit and a $SiO_{4/2}$ unit, a copolymer including a $(CH_3)_2HSiO_{1/2}$ unit, a $SiO_{4/2}$ unit, and a $(C_6H_5)SiO_{3/2}$ unit, and an organohydrogenpolysiloxane in which part or all of methyl groups of the above example compounds are substituted with another alkyl group, such as an ethyl group and a propyl group or with another aryl group, such as a phenyl group. Specific examples of such organohydrogenpolysiloxane as above include compounds represented by the following structural formulae.

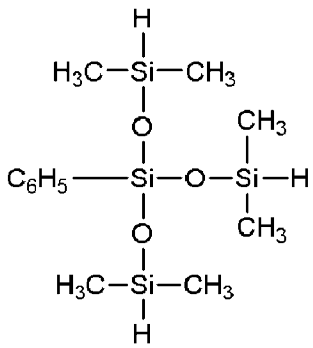

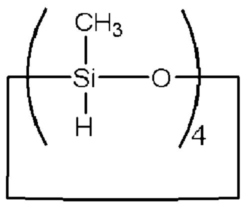

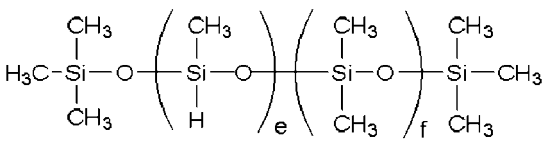

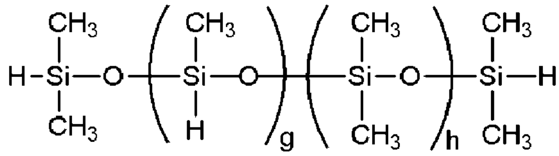

In the formulae, "e" represents an integer of 2 to 200, and "f", "g", and "h" each represent an integer of 0 to 200.

This organohydrogenpolysiloxane has a viscosity at 25°C of preferably 0.5 to 10,000 mPa·s, and particularly preferably 1 to 300 mPa·s.

A blending amount of the component (C) is an amount so that the sum of the hydrosilyl groups contained in the inventive composition is 1 to 10 mol, preferably 1.2 to 9 mol (or number of groups), and more preferably 1.5 to 8 mol (or number of groups) per mole of the sum of alkenyl groups bonded to a silicon atom contained in the inventive composition. When the amount of the hydrosilyl groups contained in the composition, including the component (C), is less than 1 mol based on 1 mol of the sum of the alkenyl groups bonded to a silicon atom contained in the components (A) and (B), the addition-curable liquid silicone rubber composition for an airbag is not sufficiently cured. When this amount is more than 10 mol, the cured silicone rubber obtained from the addition-curable liquid silicone rubber composition for an airbag may exhibit considerably deteriorated heat resistance.

One kind of the organohydrogenpolysiloxane of the component (C) may be used, or two or more kinds thereof may be used in combination.

[Component (D)]

The silica fine powder, having the BET specific surface area of 50 $m^2/g$ or more, of the component (D) acts as a reinforcing filler. That is, the silica fine powder imparts strength to the cured silicone rubber obtained from the inventive addition-curable liquid silicone rubber composition for an airbag, and by using the silica fine powder as a reinforcing filler, it is possible to form a coating film with satisfying strength required in the present invention. The silica fine powder has a specific surface area by a BET method of 50 $m^2/g$ or more, preferably 50 to 400 $m^2/g$, and more preferably 100 to 300 $m^2/g$. When the specific surface area is less than 50 $m^2/g$, it is impossible to impart mechanical strength properties satisfactory

for use as the coating agent for an airbag.

Such silica fine powder may be publicly known powder conventionally used as a reinforcing filler for a cured silicone rubber, provided that its specific surface area is within the above range. Examples thereof include aerosol silica (fumed silica) and precipitate silica (wet silica).

As the above silica fine powder, it is possible to use silica fine powder in which the surface is subjected to a hydrophobizing treatment with a surface-treating agent such as an organosilicon (typically hydrolysable) compound, for example, such as chlorosilane, alkoxysilane, ororganosilazane. In this case, these silica fine powders to be used may be those which is a powder state in advance and has been subjected directly to the surface-hydrophobizing treatment with a surface-treating agent. The silica fine powders to be used may be those that have undergone a surface-hydrophobizing treatment by adding a surface-treating agent during kneading with silicone oil (for example, the oil-like organopolysiloxane having an alkenyl group of the component (A)).

Examples of the treatment method for the component (D) include a surface treatment by a publicly known technique. For example, the untreated silica fine powder and the surface-treating agent are fed into a sealed mechanical kneader or fluidized bed apparatus at a normal pressure, and in the presence of an inert gas as necessary, a kneading treatment may be performed at a room temperature (25°C) or under a thermal treatment (heating). In some cases, water or a catalyst (such as a hydrolysis enhancer) may be used for enhancing the surface treatment. After the kneading, the mixture can be dried to produce the surface-treated silica fine powder. A blending amount of the surface-treating agent may be larger than or equal to the amount calculated based on the area to be covered by the surface-treating agent.

Specific examples of the surface-treating agent include: silazanes, such as hexamethyldisilazane; silane coupling agents, such as methyltrimethoxysilane, ethyltrimethoxysilane, propyltrimethoxysilane, butyltrimethoxysilane, dimethyldimethoxysilane, diethyldimethoxysilane, vinyltriethoxysilane, vinyltrimethoxysilane, trimethylmethoxysilane, triethylmethoxysilane, vinyltris(methoxyethoxy)silane, trimethylchlorosilane, dimethyldicholosilane, divinyldimethoxysilane, and chloropropyltrimethoxysilane; polymethylsiloxane; and organohydrogenpolysiloxane. The silica fine powder subjected to surface treatment with these agents may be use as the hydrophobic silica fine powder. The surface-treating agent is particularly preferably the silane coupling agent or silazanes.

When the silica fine powder, which is a powder state in advance and has been subjected directly to the surface-hydrophobizing treatment with a surface-treating agent having an alkenyl group, is used as the silica fine powder of the component (D), the amount of the hydrosilyl group contained in the composition including the component (C) is 1 to 10 mol (or number of groups), preferably 1.2 to 8 mol (or number of groups), and more preferably 1.5 to 6 mol (or number of groups) based on 1 mol (or number of group) of the total alkenyl groups bonded to a silicon atom contained in the composition including the components (A) and (B) and the surface-treating agent for the component (D).

This is because the addition-curable liquid silicone rubber composition for an airbag may not cure sufficiently to fail exhibit sufficient adhesiveness when the amount of the hydrosilyl groups is less than 1 mol based on 1 mol of the alkenyl groups bonded to a silicon atom in the composition, and because, meanwhile, the heat resistance of the cured silicone rubber obtained from the composition may be considerably deteriorated when the amount of the hydrosilyl groups is more than 10 mol based on 1 mol of the alkenyl groups bonded to a silicon atom in the composition.

A blending amount of the component (D) is 1 to 50 parts by mass, preferably 3 to 30 parts by mass, and more preferably 5 to 25 parts by mass based on 100 parts by mass of the organopolysiloxane of the component (A). A blending amount of less than 1 part by mass fails to yield the cured silicone rubber having sufficient strength. A blending amount of more than 50 parts by mass may increase the viscosity of the obtained addition-curable liquid silicone rubber composition for an airbag and reduce flowability, thereby deteriorating processability in coating operation.

One kind of the silica fine powder of the component (D) may be used singly, or two or more kinds thereof may be used in combination.

[Component (E)]

The catalyst for a hydrosilylation reaction of the component (E) promotes an addition reaction mainly between the alkenyl groups bonded to a silicon atom in the components (A) and (B) and the hydrosilyl groups in the component (C). This catalyst for a hydrosilylation reaction is not particularly limited, and examples thereof include: platinum-group metals, such as platinum, palladium, and rhodium; chloroplatinic acid; alcohol-modified chloroplatinic acids; coordinated compounds between chloroplatinic acid and olefins, vinylsiloxane, or an acetylene compound; and platinum-group metal compounds, such as tetrakis(triphenylphosphine)palladium and chlorotris(triphenylphosphine)rhodium. The component (E) is preferably a platinum-group metal compound.

A blending amount of the component (E) is 1 to 500 ppm, and preferably 5 to 100 ppm in terms of the mass of the catalyst metal element based on the total mass of the components (A) to (D). When this blending amount is less than 1 ppm, the addition reaction becomes considerably slow, or the addition-curable liquid silicone rubber composition for an airbag is not cured, which is unpreferable. A blending amount of more than 500 ppm poses a risk of deterioration in heat resistance of the cured silicone rubber.

One kind of the catalyst for a hydrosilylation reaction of the component (E) may be used, or two or more kinds thereof may be used in combination.

[Component (F)]

The component (F) is an organosilicon compound having an adhesiveness-imparting functional group, and is added in order to exhibit and improve the adhesiveness of the addition-curable liquid silicone rubber composition for an airbag to a base fabric of an airbag.

As the component (F), any organosilicon compound having an adhesiveness-imparting functional group may be used, but the organosilicon compound is preferably an organosilicon compound having: one or more reactive silyl groups selected from an alkoxysilyl group, an alkenyl-group-containing silyl group, and a hydrosilyl group; and one or more reactive organic groups selected from an epoxy group, an isocyanate group, and a (meth)acryl group, per molecule.

The alkoxy group bonded to a silicon atom (the alkoxysilyl group) is preferably bonded to a silicon atom to form, for example, a trialkoxysilyl group: such as a trimethoxysilyl group or triethoxysilyl group; or an alkyldialkoxysilyl group: such as a methyldimethoxysilyl group, an ethyldimethoxysilyl group, a methyldiethoxysilyl group, or an ethyldiethoxysilyl group. The epoxy group is preferably bonded to a silicon atom in a form of, for example, a glycidoxyalkyl group: such as a glycidoxypropyl group; or an epoxy-containing cyclohexylalkyl group: such as 2,3-epoxycyclohexylethyl group or a 3,4-epoxycyclohexylethyl group.

Examples of the organosilicon compound of the component (F) include: for example, epoxy-group-containing silane coupling agents (namely epoxy functional group-containing organoalkoxysilanes), such as γ-glycidoxypropyltriethoxysilane, γ-glycidoxypropylmethyldiethoxysilane, (3,4-epoxycyclohexylethyl)trimethoxysilane, (3,4-epoxycyclohexylethyl)triethoxysilane, (3,4-epoxycyclohexylethyl)methyldimethoxysilane, (3,4-epoxycyclohexylethyl)methyldiethoxysilane, (2,3-epoxycyclohexylethyl)triethoxysilane, (2,3-epoxycyclohexylethyl)methyldimethoxysilane, and (2,3-epoxycyclohexylethyl)methyldiethoxysilane; (meth)acryl-group-containing silane coupling agents, such as 3-acryloxypropyltrimethoxysilane and 3-methacryloxypropyltrimethoxysilane; or isocyanate group-containing silane coupling agents, such as 3-isocyanatepropyltriethoxysilane and 3-isocyanatepropyltrimethoxysilane; cyclic organopolysiloxanes having an epoxy group represented by the following chemical formulae; organosilicon compounds, such as a linear organopolysiloxane having an epoxy group; a mixture of two or more thereof; and a partially hydrolyzed condensate of one or two or more kinds thereof.

The major compounds are exemplified below.

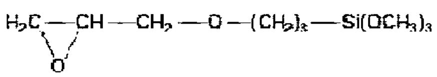

(γ-Glycidoxypropyltrimethoxysilane)

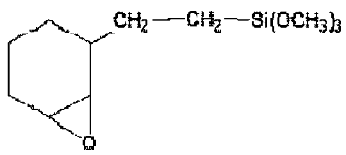

((2,3-Epoxycyclohexylethyl)trimethoxysilane)

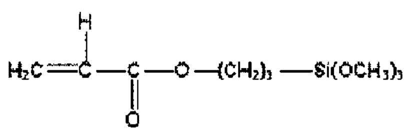

(3-Acryloxypropyltrimethoxysilane)

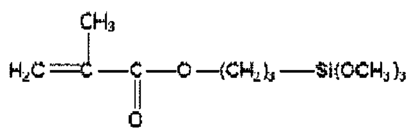

(3-Methacryloxypropyltrimethoxysilane)

$O{=}C{=}N{-}(CH_2)_3{-}Si(OCH_2CH_3)_3$

(3-Isocyanatepropyltriethoxysilane)

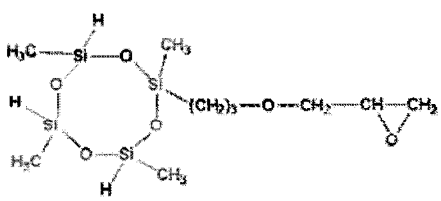

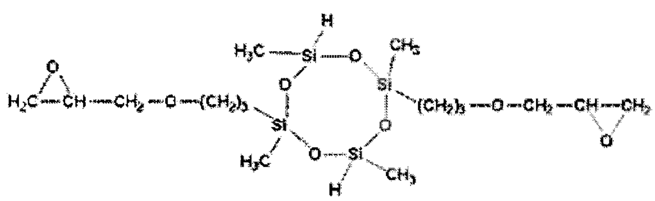

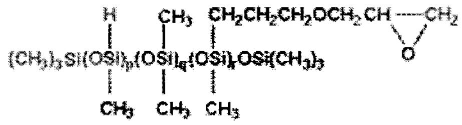

In the formulae, "p" represents an integer of 1 to 40, "q" represents an integer of 0 to 40, and "r" represents an integer of 1 to 40, preferably an integer of 1 to 20.

The blending amount of the component (F) is 0.1 to 10 parts by mass, preferably 0.15 to 5 parts by mass, based on 100 parts by mass of the organopolysiloxane of the component (A). When the blending amount is less than 0.1 part by mass, the obtained addition-curable liquid silicone rubber composition for an airbag may fail to exhibit sufficient adhesiveness. When the blending amount is more than 10 parts by mass, the thixotropy of the addition-curable liquid silicone rubber composition for an airbag may become more thixotropic, increase to reduce the flowability, thereby deteriorating processability in coating operation.

When the component (F) has an alkenyl group and/or a hydrosilyl group, the blending amount thereof is an amount so that the sum of the hydrosilyl group contained in the composition including the components (C) and (F) is 1 to 10 mol (or number of groups), preferably 1.2 to 8 mol (or number of groups), and more preferably 1.5 to 6 mol (or number of groups) based on 1 mol (or group) of the sum of the alkenyl groups bonded to a silicon atom contained in the composition including the components (A), (B), (D), and (F).

This is because the addition-curable liquid silicone rubber composition for an airbag does not cure sufficiently and fail to exhibit sufficient adhesiveness when an amount of the hydrosilyl groups based on 1 mol of the alkenyl groups bonded to a silicon atom in the addition-curable liquid silicone rubber composition for an airbag is less than 1 mol, and because, meanwhile, the heat resistance of the cured silicone rubber obtained from the addition-curable liquid silicone rubber composition for an airbag may considerably deteriorate when an amount of the hydrosilyl groups is more than 10 mol.

One kind of the component (F) may be used, or two or more kinds thereof may be used in combination.

[Component (G)]

The component (G) is expanded graphite powder, which acts as a flame-retardancy improving agent. Expanded graphite powder refers to those made by the processes: an agent, such as sulfuric acid, is inserted between graphite layers of flake graphite or other graphite powder; the agent is vaporized by heating to expand spaces between the graphite layers; and then the resultant graphite is ground into a powder. Conventional grinding techniques may be used. The grinding techniques include grinding expanded graphite sheets formed by dry molding into sheet form by using techniques, such as bead mill grinding, jet mill grinding, roll mill grinding, ball mill grinding, disc mill grinding, or hammer mill grinding. The aforementioned graphite powder is one obtained by calcining carbon or carbon black at ultra-high temperatures of 2,000 to 3,000°C under air-excluded conditions to burn out impurities and enhance its crystallization rate, and is distinct from carbon black.

The volume average particle size D50 of the expanded graphite powder, determined by laser diffraction scattering method, is preferably 0.1 to 50 μm, more preferably 0.5 to 40 μm, and further preferably 1 to 30 μm. A median size of 0.1 μm or less may increase the thixotropy of the composition to deteriorate processability in coating, and a median size of 50 μm or more may cause coating unevenness when applied to a base fabric.

The blending amount of the component (G) is 0.1 to 1 part by mass based on 100 parts by mass of the organopolysiloxane of the component (A), preferably 0.25 to 1 part by mass. When the blending amount is less than 0.1 part by mass, a sufficient flame-retardancy improving effect may not be achieved. Furthermore, when the blending amount exceeds 1 part by mass, the black color of the addition-curable liquid silicone rubber composition for an airbag becomes stronger, and the lightness of the silicone-coated base fabric reduces, and thereby it may be difficult to detect defective products during the inspection process after manufacturing a base fabric of an airbag.

One of the component (G) may be used, or two or more kinds thereof may be used in combination.

[Other Components]

In the inventive addition-curable liquid silicone rubber composition for an airbag, other optional components may be blended according to the purpose in addition to the components (A) to (G). Specific examples thereof include the following components. One kind of these other components each may be used, or two or more kinds thereof may be used in combination.

[Component (H)]

As the component (H), one or more condensation catalysts selected from an organotitanium compound, an

organozirconium compound, and an organoaluminum compound may be further contained. The component (H) is preferably one or more kinds selected from a titanium-alkoxide complex, a titanium chelate complex, a zirconium-alkoxide complex, and a zirconium chelate complex, and acts a condensation catalyst of the adhesiveness-imparting functional group in the component (F) for promoting adhesion.

Specific examples of the component (H) include: titanium-alkoxide complexes, such as titanium tetraisopropoxide, titanium tetranormalbutoxide, and titanium tetra-2-ethylhexoxide; titanium chelate complexes, such as titanium diisopropoxy bis(acetylacetonate), titanium diisopropoxy bis(ethylacetoacetate), and titanium tetraacetylacetonate; zirconium-alkoxide complexes, such as zirconium tetranormalpropoxide and zirconium tetranormalbutoxide; and zirconium chelate complexes, such as zirconium tributoxy monoacetylacetonate, zirconium monobutoxy acetylacetonate bis(ethylacetoacetate), and zirconium tetraacetylacetonate.

One or more condensation catalysts selected from the component (H), the organotitanium compound, the organozirconium compound, and the organoaluminum compound, are an optional component blended as necessary. A blending amount thereof is preferably 0.05 to 5 parts by mass, more preferably 0.1 to 5, particularly preferably 0.08 to 2 parts by mass based on 100 parts by mass of the component (A). When the blending amount is within the range of 0.05 to 5 parts by mass, the cured product obtained from the addition-curable liquid silicone rubber composition for an airbag exhibits excellent adhesiveness to a base fabric of an airbag.

One kind of the component (H) may be used, or two or more kinds thereof may be used in combination.

[Reaction Control Agent]

The reaction control agent is not particularly limited as long as it is a compound having an effect of inhibiting the curing of the catalyst for a hydrosilylation reaction of the component (E), and publicly known compounds may be used. Specific examples thereof include: phosphorus-containing compounds, such as triphenylphosphine; nitrogen-containing compounds, such as tributylamine, tetramethylethylenediamine, and benzotriazole; sulfur-containing compounds; acetylenic compounds, such as acetylene alcohols; compounds having two or more alkenyl groups; hydroperoxide compounds; and maleic acid derivatives.

The degree of the effect of inhibiting the curing due to the reaction control agent varies depending on the chemical structure of the reaction control agent. Thus, the blending amount of the reaction control agent is preferably regulated to an optimal amount for each of the used reaction control agents. Adding the reaction control agent in the optimal amount allows the addition-curable liquid silicone rubber composition for an airbag to have excellent long-term storage stability at room temperature and excellent curability.

[Non-Reinforcing Filler]

Examples of fillers other than the silica fine powder of the component (D) and the expanded graphite powder of the component (G) include, for example: fillers, such as crystalline silica (for example, quartz powder having a specific surface area by a BET method of less than 50 $m^2/g$), hollow fillers made of an organic resin, polymethylsilsesquioxane fine particle (so-called silicone resin powder), fumed titanium dioxide, magnesium oxide, zinc oxide, aluminum hydroxide, magnesium carbonate, calcium carbonate, zinc carbonate, diatomaceous earth, talc, and glass fiber; fillers in which these fillers are subjected to a surface-hydrophobizing treatment with an organosilicon compound, such as an organoalkoxysilane compound, an organochlorosilane compound, an organosilazane compound, and a low-molecular-weight siloxane compound; silicone rubber powder; and silicone resin powder.

[Other Components]

In addition to the above, for example, it is possible to blend with an organopolysiloxane having one hydrogen atom bonded to a silicon atom per molecule and having no other functional group, an organopolysiloxane having one alkenyl group bonded to a silicon atom in one molecule and having no other functional group, a non-functional organopolysiloxane having none of a hydrogen atom bonded to a silicon atom, an alkenyl group bonded to a silicon atom (so-called dimethylsilicone oil), an organic solvent, a creep-hardening inhibitor, a plasticizer, a thixotropy-imparting agent, a pigment, a dye, an antifungal agent, etc.

<Preparation of Addition-Curable Liquid Silicone Rubber Composition for Airbag>

In addition to the above components (A) to (G), by mixing the component (H), and other components to be blended further as necessary uniformly, it is possible to prepare the addition-curable liquid silicone rubber composition for an airbag.

The addition-curable liquid silicone rubber composition for an airbag obtained as above is a liquid composition at

25°C, and preferably has the viscosity at 25°C of 1 to 500 Pa·s, more preferably 2 to 400 Pa·s, and further preferably 5 to 300 Pa·s. When the viscosity at 25°C is within the above range, the liquid composition at 25°C is preferably used because it is less prone to coating unevenness and insufficient adhesiveness to the base fabric after curing when applied onto the base fabric of an airbag.

<Base Fabric of Airbag>

As the base fabric (the substrate including fabric cloth) for an airbag on which the silicone rubber layer is to be formed, publicly known materials are typically used. Specific examples thereof include woven texture of synthetic fibers, such as polyamide fibers, including 6,6-nylon, 6-nylon, and aramid fibers; and polyester fibers, including polyethylene terephthalate (PET) and polybutylene terephthalate (PBT).

<Airbag>

The inventive airbag having a cured film of the above addition-curable liquid silicone rubber composition for airbags on a base fabric of an airbag, wherein the surface of the cured film has an L value of 60 or more when measured in the L*a*b* color Space.

The inventive airbag uses an expanded graphite powder (component (G)) as a flame-retardancy improving agent. Therefore, the addition-curable liquid silicone rubber composition for an airbag is weak in black, resulting in high lightness of the silicone-coated base fabric, thereby enabling easy detection of defective products during inspection process after manufacturing the base fabric of an airbag.

In the inventive airbag, the L value of the silicone-coated surface of the silicone-coated base fabric was measured using a spectrophotometer CM-700d (manufactured by Konica Minolta, Inc.). It should be understood that the L value was measured in the L*a*b* color space.

<Method for Manufacturing Airbag>

The above addition-curable liquid silicone rubber composition for an airbag is applied on one surface or both surfaces, particularly only one surface, of the base fabric (the substrate including fabric cloth) of an airbag, and then is heated and cured using a drying furnace or the like to form the silicone rubber layer (cured film). The silicone rubber-coated base fabric of an airbag is obtained as above and can be used to manufacture an airbag.

Here, a common method can be adopted as a method for coating the base fabric of an airbag with the addition-curable liquid silicone rubber composition for an airbag, and coating with a knife coater is preferable. The thickness of the coating layer (or amount to be applied on a surface) is typically 5 to 100 g/$m^2$, preferably 8 to 90 g/$m^2$, and more preferably 10 to 80 g/$m^2$.

The addition-curable liquid silicone rubber composition for an airbag can be cured under a publicly known curing condition by a publicly known curing method. Specifically, the composition can be cured by heating at 100 to 200°C for 1 to 30 minutes, for example.

Methods for processing the base fabric (the silicone rubber-coated base fabric of an airbag) of an airbag, having the silicone rubber layer on one surface or both surfaces, produced as above into the airbag include a method in which the outer peripheries of two sheets of the above silicone rubber-coated base fabric of an airbag are adhered to each other with an adhesive while arranging the surfaces coated with the silicone rubber inside; and then the layers with the adhesive are sewn together to produce the airbag. Alternatively, a method in which both outer surfaces of the base fabrics of an airbag, produced in advance by double-weaving, are coated with the addition-curable liquid silicone rubber composition for an airbag to a predetermined coating amount as above, and the composition is cured under a predetermined curing condition, may be adopted. As the adhesive used here, a publicly known adhesive may be used, but a silicone adhesive called "seam sealant" is preferable in terms of adhesiveness, adhesion durability, etc.

EXAMPLE

Hereinafter, the present invention will be specifically described with showing Preparation Examples, Examples, and Comparative Examples, but the present invention is not limited to the following Examples. The viscosity, weight-average molecular weight (weight-average degree of polymerization), and median size shown below are values determined under the above-mentioned conditions.

The following components were used as the component (A).

(A-1): Linear dimethylpolysiloxane blocked at both ends of the molecular chain with a vinyldimethylsiloxy group, having a weight-average polymerization degree of 750 and a viscosity of 30,000 mPa·s.

(A-2): linear dimethylpolysiloxane blocked at both ends of the molecular chain with a vinyldimethylsiloxy group, having a weight-average polymerization degree of 450 and a viscosity of 5,000 mPa·s.

(A-3): Linear dimethylpolysiloxane blocked at both ends of the molecular chain with a vinyldimethylsiloxy group, having a weight-average polymerization degree of 200 and a viscosity of 1,000 mPa·s.

The following components were used as the component (B).

(B): Powdery organopolysiloxane resin having a three-dimensional network structure including a $(CH_3)_3SiO_{1/2}$ unit, a $(CH_3)(CH_2=CH)SiO_{2/2}$ unit, and a $SiO_{4/2}$ unit, and having a weight-average molecular weight of 5,500, a Q unit content of 56 mol%. and an alkenyl group content of 6.7 mol% based on the total substituents bonded to a silicon atom.

The following component was used as the component (C).

(C): A linear dimethylsiloxane-methylhydrogensiloxane copolymer (hydrosilyl group content: 0.0089 mol/g) blocked at both ends of the molecular chain with a trimethylsiloxy group, having a weight-average polymerization degree of 20, the average number of hydrosilyl groups per molecule of 9, and a viscosity of 8 mPa s.

The following component was used as the component (D).

(D): Silica fine powder having a specific surface area of 300 $m^2/g$ measured by the BET method (product name: Aerosil 300, manufactured by Nippon Aerosil Co., Ltd.)

The following component was used as the component (E).

(E): Dimethylpolysiloxane solution containing 1 mass% of chloroplatinic acid/1,3-divinyltetramethyldisiloxane complex, in terms of platinum atom content.

The following component was used as the component (F).

(F): γ-glycidoxypropyltrimethoxysilane

The following components were used as the component (G).

(G-1): Expanded graphite powder (Product name: CS-5, manufactured by Marutoyo Casting Materials Co., Ltd., median size: 7μm), according to the present invention

(G-2): Flake graphite powder (Product name: MT-4, manufactured by Marutoyo Casting Materials Co., Ltd., median size: 4 μm), not according to the present invention

(G-3): Carbon fiber (Product name: XN-500, manufactured by Japan Graphite Fiber Co., Ltd., average length: 50 μm), not according to the present invention

(G-4): Diamond powder (Product name: BRM, manufactured by Besco Superabrasives, median size: 10 μm), not according to the present invention

(G-5): Carbon black (Product name: Denka Black, manufactured by Denka Co., Ltd., median size: 0.35 μm), not according to the present invention

The following component was used as the component (H).

(H): Zirconium tetraacetoacetate (Product name: ZC-162, manufactured by Matsumoto Fine Chemical Co., Ltd.)

The following component was used as a reaction control agent.

(Reaction control agent): 1-Ethynylcyclohexanol

[Preparation Example 1]

60 parts by mass of the base oil (A-1), 8 parts by mass of hexamethyldisilazane, 2 parts by mass of water, and 40 parts by mass of silica fine powder (D) were fed into a kneader, and the mixture was mixed at room temperature for 1 hour. Thereafter, 8 parts by mass of hexamethyldisilazane was added, and the mixture was further mixed at room temperature for 1 hour. Thereafter, the temperature was raised to 150°C, and the mixture was continuously mixed for 2 hours. Thereafter, 30 parts by mass of the base oil (A-1) was added, and the mixture was mixed until the mixture became uniform to obtain a base compound.

[Examples 1 to 5 and Comparative Examples 1 to 7]

The components were mixed at blending ratios shown in Tables 1 and 2 with a mixer at room temperature for 30 minutes to prepare addition-curable liquid silicone rubber compositions for an airbag.

[Table 1]

| | Component | Example 1 | Example 2 | Example 3 | Example 4 | Example 5 |
|---|---|---|---|---|---|---|
| Base compound | A-1 | 47.5 | 47.5 | 47.5 | 47.5 | 43.7 |
| | D | 21.1 | 21.1 | 21.1 | 21.1 | 19.4 |
| Base oil | A-2 | 14.3 | 14.3 | 14.3 | 14.3 | 5.3 |
| | A-3 | 38.2 | 38.2 | 38.2 | 38.2 | 51 |
| Organopolysiloxane resin having a three-dimensional network structure | B | 14.3 | 14.3 | 14.3 | 14.3 | 5.3 |
| Crosslinking agent | C | 9.70 | 9.70 | 9.70 | 9.70 | 6.73 |
| Platinum catalyst | E | 0.26 | 0.26 | 0.26 | 0.26 | 0.24 |
| Control agent | 1-ethynyl cyclohexanol | 0.05 | 0.05 | 0.05 | 0.05 | 0.05 |
| Adhesion aid | F | 0.32 | 0.32 | 0.32 | 0.32 | 0.29 |
| Flame-retardant agent | G-1 | 1.00 | 0.25 | 0.5 | 1.00 | 1.00 |
| Adhesion promoter | H | | 0.08 | 0.08 | 0.08 | 0.08 |
| Hydrosilyl groups in entire composition / Vinyl groups in entire composition | | 4.9 | 4.9 | 4.9 | 4.9 | 4.3 |
| Viscosity of composition [Pa·s] | | 27 | 28 | 29 | 31 | 38 |
| Flame-retardancy test | Burn rate [mm/min] | 24 | 24 | 27 | 26 | 26 |
| | Self-extinguishing property [%] | 100 | 100 | 100 | 100 | 100 |
| Colorimeter | L value | 70 | 81 | 77 | 71 | 70 |

[Table 2]

| | Component | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Base compound | A-1 | 47.5 | 47.5 | 47.5 | 47.5 | 47.5 | 47.5 | 47.5 |
| | D | 21.1 | 21.1 | 21.1 | 21.1 | 21.1 | 21.1 | 21.1 |
| Base oil | A-2 | 14.3 | 14.3 | 14.3 | 14.3 | 14.3 | 14.3 | 14.3 |
| | A-3 | 38.2 | 38.2 | 38.2 | 38.2 | 38.2 | 38.2 | 38.2 |
| Organopolysiloxane resin having a three-dimensional network structure | B | 14.3 | 14.3 | 14.3 | 14.3 | 14.3 | 14.3 | 14.3 |
| Crosslinking agent | C | 9.7 | 9.7 | 9.7 | 9.7 | 9.7 | 9.7 | 9.7 |
| Platinum catalyst | E | 0.26 | 0.26 | 0.26 | 0.26 | 0.26 | 0.26 | 0.26 |
| Control agent | 1-ethynyl cyclohexanol | 0.05 | 0.05 | 0.05 | 0.05 | 0.05 | 0.05 | 0.05 |
| Adhesion aid | F | 0.32 | 0.32 | 0.32 | 0.32 | 0.32 | 0.32 | 0.32 |
| Flame-retardant agent | G-2 | | 1.0 | | | | | |
| | G-3 | | | 1.0 | | | | |
| | G-4 | | | | 1.0 | | | |
| | G-5 | | | | | 0.25 | 0.5 | 1.0 |
| Adhesion promoter | H | | 0.08 | 0.08 | 0.08 | 0.08 | 0.08 | 0.08 |
| Hydrosilyl groups in entire composition / Vinyl groups in entire composition | | 4.9 | 4.9 | 4.9 | 4.9 | 4.9 | 4.9 | 4.9 |
| Viscosity of composition [Pa·s] | | 26 | 27 | 26 | 27 | 29 | 32 | 35 |
| Flame-retardancy test | Burn rate [mm/min] | 32 | 47 | 37 | 33 | 28 | 25 | 26 |
| | Self-extinguishing property [%] | 40 | 50 | 40 | 60 | 100 | 100 | 100 |
| Colorimeter | L value | 86 | 68 | 75 | 85 | 63 | 57 | 42 |

<Method for Preparing Silicone Rubber-Coated Base Fabric>

A PA66 base fabric with 210 denier was coated with each of the silicone rubber coating compositions for an airbag prepared as shown in Tables 1 and 2 by knife coating using a lab coater available from Mathis AG (Product name; LTE-S) so that the applying amount was 20 g/$m^2$. Thereafter, the base fabric was placed in a dryer at 200°C for 1 minute, and the silicone rubber coating composition was cured to prepare a silicone rubber-coated base fabric.

<Flame-Retardancy test>

In accordance with a method described in Federal Motor Vehicle Safety Standard-302 (FMVSS-302), the flame retardancy was evaluated. Specifically, each of the silicone rubber-coated base fabrics prepared above was cut to 10 cm in width × 35 cm in length. Thereafter, the silicone rubber-coated surface was positioned upward, and the travel distance and the travel time while the flame was combusted in accordance with the method described in FMVSS-302, and then disappeared, were measured. From these travel distance and travel time, a burn rate was calculated. In this evaluation, a specimen was evaluated as flame retardancy passing when satisfying any one of cases: (1) the specimen did not combust

or self-extinguished (SE) before reaching the benchmark A; (2) the specimen was self-extinguished (SE) with a travel distance of 51 mm or less (and 60 seconds or less); and (3) the burn rate was 102 mm/min or less. The evaluation test was performed with N=10. A case in which all the specimens were passing was assessed as "passing", and a case in which even one specimen was a failure was assessed as "failure". Tables 1 and 2 show the results. In addition, a self-extinguishing property (an SE rate) was determined using the following formula, and the results are shown in Tables 1 and 2. It should be understood that a higher SE rate is regarded as better flame retardancy.

SE rate (%) = [((1) number of specimens that did not ignite or self-extinguished before reaching the benchmark A + (2) number of specimens that self-extinguished within a travel distance of 51 mm (and within 60 seconds))/10] × 100

<Method for Measuring L Value Using Colorimeter>

The L value of the silicone-coated surface of the prepared silicone rubber-coated base fabric was measured using a spectrophotometer(L) CM-700d (manufactured by Konica Minolta, Inc.). The median values measured with N=3 are shown in Tables 1 and 2. It should be understood that the L value was measured in the L*a*b* Color Space.

As can be seen from Table 1, in Examples 1 to 5, which used the inventive addition-curable liquid silicone rubber composition for an airbag, excellent results were achieved in the flame-retardancy test. Furthermore, the L value, which indicates lightness, was high when measured with a colorimeter.

On the other hand, as can be seen from Table 2, in Comparative Examples 1 to 7, in which powders mainly contained carbon like expanded graphite, were inferior in flame retardancy to the Examples, or had low L values, which indicate lightness, measured with a colorimeter.

Thus, according to the present invention, the cured film surface of the airbag has high lightness (L value), and thereby the silicone-coated base fabric has high lightness, making it easy to detect defective products during the inspection process after the airbag base fabric is manufactured.

The present description includes the following embodiments.

[1]: An addition-curable liquid silicone rubber composition for an airbag, the composition comprising

(A) a linear organopolysiloxane having two or more alkenyl groups bonded to a silicon atom per molecule and having a weight-average polymerization degree of 50 to 2,000: 100 parts by mass;
(B) a powdery organopolysiloxane resin having a three-dimensional network structure, wherein the organopolysiloxane resin does not have a hydrosilyl group: 5 to 100 parts by mass;
(C) organohydrogenpolysiloxane having two or more hydrosilyl groups per molecule;
(D) a silica fine powder having a BET specific surface area of 50 $m^2/g$ or more; 1 to 50 parts by mass;
(E) a catalyst for a hydrosilylation reaction: 1 to 500 ppm in terms of the mass of the catalyst metal element, based on the total mass of the components (A) to (D);
(F) an organosilicon compound having an adhesiveness-imparting functional group: 0.1 to 10 parts by mass; and
(G) an expanded graphite powder having a median size of 0.1 to 50 μm: 0.1 to 1 parts by mass,

wherein, the component (c) is contained in such that the total sum of the hydrosilyl group in the composition is 1 to 10 mol per 1 mol of the total alkenyl groups bonded to a silicon atom in the composition.

[2]: The addition-curable liquid silicone rubber composition for an airbag of the above [1], further comprising, as a component (H), one or more condensation catalysts selected from an organotitanium compound, an organozirconium compound, and an organoaluminum compound at 0.05 to 5 parts by mass based on 100 parts by mass of the component (A).

[3]: The addition-curable liquid silicone rubber composition for an airbag of the above [1] or [2], wherein the component (F) is an organosilicon compound having: one or more reactive silyl groups selected from an alkoxysilyl group, an alkenyl-group-containing silyl group, and a hydrosilyl group; and one or more reactive organic groups selected from an epoxy group, an isocyanate group, and a (meth)acryl group, per molecule.

[4]: An airbag having a cured film of the addition-curable liquid silicone rubber composition for airbags according to any one of the above [1] to [3] on a base fabric of an airbag, wherein the surface of the cured film has an L value of 60 or more when measured in the L*a*b* color Space.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. An addition-curable liquid silicone rubber composition for an airbag, the composition comprising

   (A) a linear organopolysiloxane having two or more alkenyl groups bonded to a silicon atom per molecule and having a weight-average polymerization degree of 50 to 2,000: 100 parts by mass;
   (B) a powdery organopolysiloxane resin having a three-dimensional network structure, wherein the organopolysiloxane resin does not have a hydrosilyl group: 5 to 100 parts by mass;
   (C) organohydrogenpolysiloxane having two or more hydrosilyl groups per molecule;
   (D) a silica fine powder having a BET specific surface area of 50 $m^2/g$ or more; 1 to 50 parts by mass;
   (E) a catalyst for a hydrosilylation reaction: 1 to 500 ppm in terms of the mass of the catalyst metal element, based on the total mass of the components (A) to (D);
   (F) an organosilicon compound having an adhesiveness-imparting functional group: 0.1 to 10 parts by mass; and
   (G) an expanded graphite powder having a median size of 0.1 to 50 $\mu$m: 0.1 to 1 parts by mass,

   wherein, the component (c) is contained in such that the total sum of the hydrosilyl group in the composition is 1 to 10 mol per 1 mol of the total alkenyl groups bonded to a silicon atom in the composition.

2. The addition-curable liquid silicone rubber composition for an airbag according to claim 1, further comprising, as a component (H), one or more condensation catalysts selected from an organotitanium compound, an organozirconium compound, and an organoaluminum compound at 0.05 to 5 parts by mass based on 100 parts by mass of the component (A).

3. The addition-curable liquid silicone rubber composition for an airbag according to claim 1, wherein the component (F) is an organosilicon compound having: one or more reactive silyl groups selected from an alkoxysilyl group, an alkenyl-group-containing silyl group, and a hydrosilyl group; and one or more reactive organic groups selected from an epoxy group, an isocyanate group, and a (meth)acryl group, per molecule.

4. An airbag having a cured film of the addition-curable liquid silicone rubber composition for airbags according to any one of claims 1 to 3 on a base fabric of an airbag, wherein the surface of the cured film has an L value of 60 or more when measured in the L*a*b* color Space.

**INTERNATIONAL SEARCH REPORT**

International application No. **PCT/JP2024/023540**

**A. CLASSIFICATION OF SUBJECT MATTER**

***D06M 15/643***(2006.01)i; ***B60R 21/235***(2006.01)i; ***C08K 3/04***(2006.01)i; ***C08K 3/36***(2006.01)i; ***C08K 5/54***(2006.01)i; ***C08L 83/04***(2006.01)i; ***C09D 183/04***(2006.01)i
FI: D06M15/643; B60R21/235; C08K3/04; C08K3/36; C08K5/54; C08L83/04; C09D183/04

According to International Patent Classification (IPC) or to both national classification and IPC

**B. FIELDS SEARCHED**

Minimum documentation searched (classification system followed by classification symbols)

D06M15/643; B60R21/235; C08K3/04; C08K3/36; C08K5/54; C08L83/04; C09D183/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-269184 A (SEIREN CO., LTD.) 18 October 2007 (2007-10-18) claims, paragraph [0029] | 1-4 |
| A | JP 2003-507588 A (DOW CORNING CORPORATION) 25 February 2003 (2003-02-25) claims | 1-4 |
| A | JP 2023-102441 A (SHIN-ETSU CHEMICAL CO., LTD.) 25 July 2023 (2023-07-25) claims | 1-4 |
| A | JP 2001-18740 A (TOYO TIRE & RUBBER CO., LTD.) 23 January 2001 (2001-01-23) claims, paragraphs [0020]-[0030], examples | 1-4 |
| A | JP 2001-288413 A (WACKER ASAHIKASEI SILICONE CO., LTD.) 16 October 2001 (2001-10-16) claims, paragraphs [0046]-[0062], examples | 1-4 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 August 2024** | **10 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/023540**

| Patent document cited in search report | Publication date (day/month/year) | Patent family member(s) | Publication date (day/month/year) |
|---|---|---|---|
| JP 2007-269184 A | 18 October 2007 | (Family: none) | |
| JP 2003-507588 A | 25 February 2003 | US 6354620 B1 claims<br>WO 2001/012895 A1<br>EP 1208263 A1<br>CN 1372610 A<br>KR 10-0709499 B1 | |
| JP 2023-102441 A | 25 July 2023 | (Family: none) | |
| JP 2001-18740 A | 23 January 2001 | (Family: none) | |
| JP 2001-288413 A | 16 October 2001 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019513907 A
- WO 2018168315 A1
- JP 2022072086 A
- JP H7300774 A
- JP H7195990 A